# FASCICULE DE BREVET EUROPEEN

(11) **EP 1 305 546 B1**
(45) Date de publication et mention de la délivrance du brevet: **07.12.2005**
(21) Numéro de dépôt: 01963061.5
(22) Date de dépôt: 03.08.2001
(51) Int. Cl.: F16L 1/11, G01V 15/00, H01R 13/703, G01V 3/02

(54) **DISPOSITIF DE DETECTION ET DE SURVEILLANCE D'OUVRAGES ENTERRES**
VORRICHTUNG ZUR DETEKTION UND ÜBERWACHUNG VON UNTERIRDISCHEN BAUWERKEN
DEVICE FOR DETECTING AND MONITORING UNDERGROUND WORKS

(30) Priorité: 03.08.2000 FR 0010280
(43) Date de publication de la demande: 02.05.2003
(73) Titulaire: PLYMOUTH FRANCAISE, 69320 Feyzin (FR)
(72) Inventeur: MARSAUD, Jean-jacques, F-69160 TASSIN LA DEMI LUNE (FR)
(74) Mandataire: Maureau, Philippe
(86) Numéro de dépôt international: PCT/FR2001/002549
(87) Numéro de publication internationale: WO 2002/012767

(56) Documents cités:
- EP-A- 0 253 645
- EP-A- 0 810 451
- US-A- 4 449 098

## Description

La présente invention a pour objet un dispositif de détection et de surveillance d'ouvrages enterrés.

Il est connu, aujourd'hui, de disposer dans le sol au-dessus des conduites souterraines, qu'il s'agisse de conduites de fluides, tels qu'eau ou gaz, ou de câbles électriques, des dispositifs avertisseurs qui sont enterrés au-dessus de ces conduites lors de leur pose. Cela permet, si des travaux sont effectués ultérieurement, de détecter la présence d'une conduite avant d'atteindre celle-ci. Les dispositifs avertisseurs se présentent le plus souvent sous la forme de grillages souples réalisés en matière synthétique, comportant généralement des éléments de signalisation susceptibles, lors de fouilles, par exemple lors de la réalisation d'une tranchée à l'aide du godet d'une pelleteuse, d'être séparés de la structure initiale de l'ensemble du grillage, tout en conservant, au moins sur une certaine longueur, leur forme d'origine, ce qui permet à ces éléments de signalisation d'être parfaitement visibles, tant dans le godet de la pelleteuse que sur les parois de la tranchée ainsi creusée. Il s'agit d'une signalisation qui est purement visuelle.

En complément de cette signalisation visuelle, il existe d'autres techniques de repérage qui sont de plus en plus appliquées à l'échelle industrielle, et mettent en oeuvre des phénomènes électriques ou électromagnétiques, en étant basés essentiellement sur la détection soit d'éléments conducteurs linéaires (systèmes continus), soit de circuits de résonance (systèmes discontinus).

Dans le cas d'éléments conducteurs linéaires, il s'agit de produits constitués de fils ou de rubans métalliques isolés ou non, qui sont fixés sur des supports constitués par les dispositifs avertisseurs eux-mêmes, ou qui sont logés dans des tubes, par exemple en matière synthétique.

Dans ce cas, il se produit une détérioration du dispositif de détection sous l'action, par exemple, du godet d'une pelleteuse, en même temps que le grillage avertisseur est détérioré en remplissant sa fonction de visualisation.

Il est également connu par le document EP 0 810 451 de réaliser un dispositif comprenant un élément conducteur linéaire destiné à être enterré indépendamment d'un grillage avertisseur, à proximité d'un ouvrage enterré, cet élément conducteur étant recouvert d'un matériau isolant et étant susceptible d'être détecté. A cet effet, l'élément conducteur est raccordé à ses extrémités dans des boîtiers de fin de ligne, dans des boîtiers intermédiaires de liaison ou dans des boîtiers d'extrémité de lignes de dérivation encore appelés boîtiers clients, au niveau desquels il est possible d'injecter un signal, tel qu'un courant alternatif obtenu à l'aide d'un générateur de tension, et qui va produire un champ électromagnétique le long du conducteur. Pour injecter un signal dans le tronçon souhaité du conducteur, il est nécessaire d'isoler ce tronçon du reste du conducteur.

A cet effet, et comme décrit dans le document EP 0810 451, les boîtiers de liaison ou de fin de ligne sont équipés, d'une part, d'un point de raccordement pour l'injection d'un signal et, d'autre part, d'un interrupteur destiné à isoler le tronçon de conducteur dans lequel le signal doit être injecté. Les interrupteurs utilisés sont des interrupteurs à commande manuelle, dont l'actionnement est réalisé par l'intermédiaire d'un levier ou d'un basculeur. Malgré la présence de repères visuels sur les interrupteurs symbolisant les positions d'ouverture, de fermeture de ceux-ci, il existe des risques d'erreur importants sur le positionnement de l'interrupteur ayant pour conséquence une éventuelle absence de continuité électrique du réseau. Ces risques sont d'autant plus importants que l'accès au boîtier considéré est difficile.

Le but de l'invention est de fournir un dispositif de détection et de surveillance d'ouvrages enterrés, dans lequel la continuité électrique du réseau soit totalement garantie.

A cet effet, le dispositif qu'elle concerne, du type comportant un élément conducteur linéaire disposé à proximité de l'ouvrage à détecter et à surveiller, associé à un système de connexion comprenant des boîtiers de liaison de plusieurs tronçons du conducteur et des boîtiers de fin de ligne, dont au moins certains comportent un point de raccordement pour un générateur d'un signal de détection et au moins un interrupteur permettant d'isoler le tronçon de conducteur dans lequel le signal doit être injecté, est caractérisé en ce qu'un boîtier, muni d'un point de raccordement pour un générateur d'un signal de détection comprend un contact, normalement en position fermée, constitué par deux pièces conductrices qui, disposées sur la ligne dont la continuité est à assurer, sont en appui l'une contre l'autre lorsqu'aucune action n'est exercée sur elles, le point de raccordement comportant des moyens d'introduction et de guidage d'une fiche qui, reliée au générateur du signal de détection, est destinée, lorsqu'elle est engagée dans le boîtier, à prendre appui sur la pièce conductrice reliée au tronçon de ligne dans lequel le signal doit être injecté tout en écartant celle-ci de l'autre pièce conductrice.

Il est ainsi possible d'assurer la continuité électrique du réseau de surveillance d'ouvrages enterrés puisque les contacts qui sont utilisés pour isoler un tronçon de ligne pour tester celui-ci par injection d'un signal, sont placés automatiquement en position de fermeture lorsqu'aucun signal n'est injecté. Lors de l'injection d'un signal dans un tronçon de ligne, il n'est pas nécessaire, comme tel était le cas précédemment, de basculer un interrupteur préalablement à l'injection du signal, l'engagement de la fiche à l'emplacement du boîtier prévu à cet effet assurant automatiquement l'ouverture du contact précédemment établi à cet emplacement.

Suivant une forme simple d'exécution de ce dispositif, les pièces conductrices sont constituées par des lamelles métalliques dont l'une au moins est déformable élastiquement pour être en appui élastique contre l'autre lamelle, en position normale, et écartée de celle-ci par déformation élastique sous l'action de la fiche d'amenée du signal de détection.

C'est donc l'élasticité de l'une des pièces conductrices qui assure à la fois le contact de celle-ci contre l'autre pièce lorsqu'aucune action n'est exercée sur elle, et qui permet l'ouverture du contact précédemment établi, et la réalisation d'un nouveau contact avec la fiche appartenant au générateur du signal de détection lorsque celui-ci est introduit à l'emplacement prévu à cet effet dans le boîtier.

Selon une caractéristique de l'invention la pièce conductrice qui n'est pas actionnée par la fiche d'amenée du signal de détection est raccordée à la terre directement ou par l'intermédiaire d'un para-surtensionneur.

Un réseau de détection et de surveillance d'ouvrages enterrés comportant plusieurs types de boîtiers, les différents types de boîtiers sont adaptés à la mise en oeuvre de l'injection d'un signal de détection.

A cet effet, ce dispositif comprend au moins un boîtier de fin de ligne comportant une pièce conductrice reliée à la terre et une pièce conductrice déformable sous l'action de la fiche d'amenée du signal de détection, reliée au tronçon de conducteur, dans lequel le signal doit être injecté.

Suivant les configurations du réseau, ce dispositif peut comprendre d'autres types de boîtiers.

C'est ainsi que, suivant une première possibilité, ce dispositif comprend au moins un boîtier de liaison de deux conducteurs comportant deux pièces conductrices déformables reliées chacune à un conducteur, et en contact chacune avec une pièce conductrice non déformable, les deux pièces conductrices non déformables étant reliées par un tronçon de conducteur lui-même relié à la terre par l'intermédiaire d'un para-surtensionneur.

Suivant une autre possibilité, ce dispositif comprend au moins un boîtier de fin de ligne de dérivation comportant une pièce conductrice reliée à la terre par l'intermédiaire d'un para-surtensionneur et une pièce conductrice déformable sous l'action de la fiche d'amenée du signal de détection, reliée au tronçon de conducteur de la ligne de dérivation, dans lequel le signal doit être injecté, c'est-à-dire le tronçon de conducteur relié directement ou non à la ligne principale du dispositif.

Suivant encore une autre possibilité, ce dispositif comprend au moins un boîtier double de fin de ligne, comportant deux pièces conductrices déformables reliées chacune à un conducteur et en contact chacune avec une pièce conductrice non déformable, reliée directement à la terre.

De toute façon l'invention sera mieux comprise à l'aide de la description qui suit, en référence au dessin schématique annexé, représentant à titre d'exemple non limitatif une forme d'exécution de ce dispositif.

Figure 1 est une vue très schématique d'un réseau de détection et de surveillance.

Figures 2 et 3 sont deux vues d'un boîtier de fin de ligne respectivement au repos et en période d'injection d'un signal.

Figures 4 et 5 sont deux vues d'un coffret de liaison de deux conducteurs respectivement au repos et en position d'injection d'un signal sur l'un des deux conducteurs.

Figures 6 et 7 sont deux vues d'un boîtier de fin de ligne de dérivation respectivement au repos et en période d'injection d'un signal.

Figures 8 et 9 sont deux vues d'un boîtier double de fin de ligne respectivement au repos et en période d'injection d'un signal sur le conducteur de l'une des deux lignes.

Figures 10 et 11 sont deux vues en coupe longitudinale d'un contact contenu dans un boîtier au cours de deux phases d'utilisation.

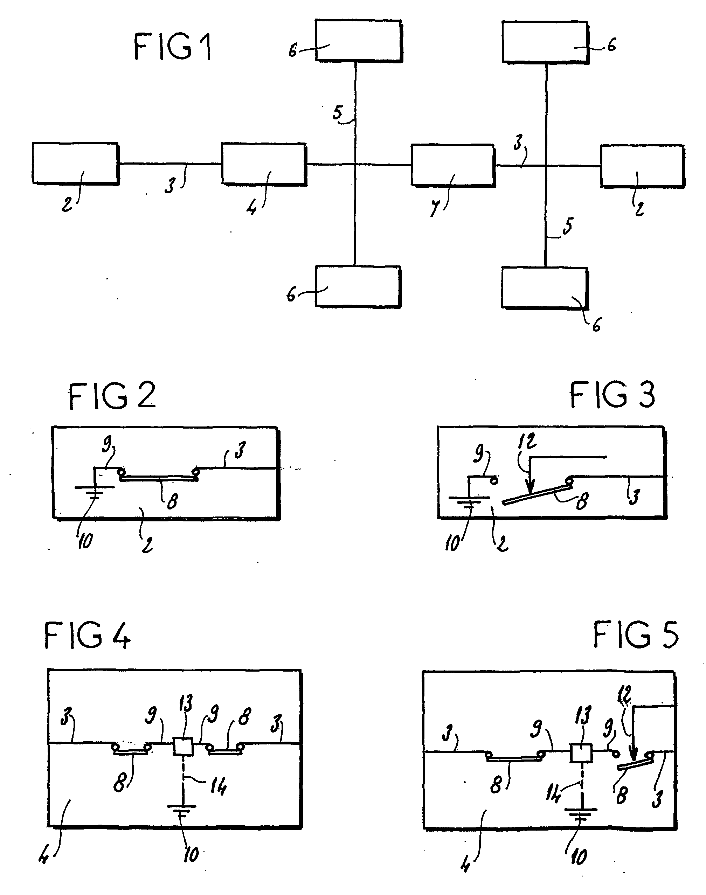

Le réseau de détection et de surveillance représenté au dessin, qui peut être associé à différents types de conduites souterraines, qu'il s'agisse de conduites de fluide ou de câbles électriques, comprend deux coffrets de fin de ligne 2. A partir du coffret de fin de ligne 2 représenté à la partie gauche, s'étend une ligne 3 constituée par un élément conducteur, éventuellement gainé, et éventuellement placé à l'intérieur d'un tube de protection, disposé à proximité de l'ouvrage à détecter et à surveiller. Compte tenu de la longueur de l'ouvrage à surveiller, ce conducteur doit être séparé en plusieurs tronçons. A cet effet sont prévus plusieurs coffrets de liaison dont l'un 4 est représenté à la figure 1. A partir de la ligne principale s'étendent des lignes de dérivation 5 qui se terminent chacune par un boîtier de fin de ligne de dérivation 6. En fonction de la longueur du réseau, il peut être possible d'interrompre totalement le conducteur pour le faire repartir sur un nouveau tronçon distinct. A cet effet, il peut être prévu des boîtiers doubles de fin de ligne dont l'un 7 est représenté au dessin à la figure 1.

Les figures 2 et 3 représentent plus en détail un coffret de fin de ligne. Ce coffret est schématisé et n'est pas représenté de façon matérielle.

Aux figures 2 et 3 sont représentés le conducteur 3 auquel est relié une lamelle déformable conductrice 8 dont l'élasticité la maintient en contact avec une lamelle 9 non déformable. Cette lamelle 9 est reliée à la terre en 10.

Les lamelles 8 et 9 sont représentées plus en détail aux figures 10 et 11. La figure 10 représente les deux lamelles lorsqu'aucune action n'est exercée sur elles. Le conducteur 3 est donc relié par l'intermédiaire des lamelles 8 et 9 en 10. Lorsqu'une fiche 12 amenant le signal à partir du générateur électrique est engagé dans un évidemment ménagé à cet effet dans le boîtier, cette fiche établit un contact électrique avec la lame 8, et déforme élastiquement celle-ci pour ouvrir le contact de la lamelle 8 avec la lamelle 9. Le générateur électrique injecte donc par l'intermédiaire de la lamelle 8 un signal électrique sur le conducteur 3. Ce signal va être transporté jusqu'au coffret de liaison 4.

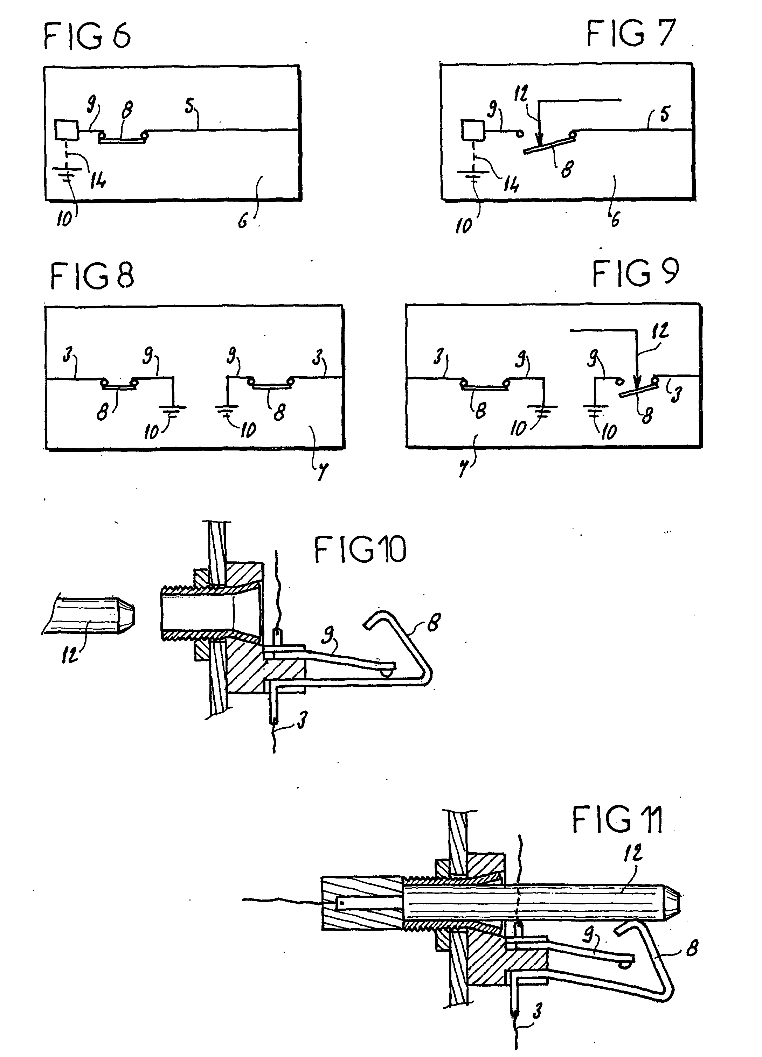

Comme montré aux figures 4 et 5, un coffret de liaison 4 comprend deux lames conductrices déformables 8 reliées chacune à un conducteur 3, le rôle du coffret de liaison étant d'assurer une continuité entre les deux tronçons de conducteur 3. Chaque lamelle déformable 8 est normalement en contact avec une lamelle non déformable 9, les deux lamelles 9 étant reliées par un tronçon de conducteur 13 qui peut être mis à la terre par l'intermédiaire d'un para-surtensionneur 14.

La figure 5 représente le cas de l'injection d'un signal sur le tronçon de conducteur 3 situé à la droite du dessin.

Les figures 6 et 7 représentent un boîtier de fin de ligne de dérivation 6. Chaque boîtier comprend une lamelle déformable 8 reliée à un conducteur 5, cette lamelle 8 prenant appui sur une lamelle 9 reliée en 10 à la terre.

La figure 7 montre que lors de l'injection du signal, la lamelle 8 ouvre le contact précédemment établi avec la lamelle 9, de telle sorte que le signal est transporté par le conducteur 5 vers un coffret de liaison ou un coffret de fin de ligne.

Les figures 8 et 9 représentent un boîtier double de fin de ligne 7. Ce boîtier comporte deux lamelles 8 en contact permanent avec deux conducteurs 3 distincts et en contact élastique avec deux lamelles 9 reliées chacune à une terre 10. La figure 9 montre le basculement de la lamelle 8 de droite pour l'injection d'un signal sur le conducteur 3 correspondant à l'aide d'une fiche 12 décrite en référence à la figure 11.

Comme il ressort de ce qui précède, l'invention apporte une grande amélioration à la technique existante en fournissant un dispositif assurant une continuité électrique du circuit sur l'ensemble du réseau, cette continuité ne pouvant être interrompue que par couplage direct d'un générateur de fréquence, et ceci automatiquement par introduction au niveau d'un boîtier comportant le point d'injection choisi d'une fiche reliée à ce générateur. A l'issue de l'opération de couplage l'opérateur retire la fiche, ce qui assure automatiquement le rétablissement de la continuité électrique du réseau.

Comme il va de soi l'invention ne se limite pas aux seules formes d'exécution du dispositif décrit en référence au dessin schématique annexé dans le cas d'un certain nombre de boîtiers, elle en embrasse toutes les variantes d'exécution demeurant dans le cadre de la protection des revendications.

## Revendications

1. Dispositif de détection et de surveillance d'ouvrages enterrés, du type comportant un élément conducteur linéaire (3, 5) disposé à proximité de l'ouvrage à détecter et à surveiller, associé à un système de connexion comprenant des boîtiers de liaison (4) de plusieurs tronçons du conducteur et des boîtiers de fin de ligne (2, 6, 7), dont au moins certains comportent un point de raccordement pour un générateur d'un signal de détection et au moins un interrupteur permettant d'isoler le tronçon de conducteur dans lequel le signal doit être injecté, **caractérisé en ce qu'**un boîtier (2, 4, 6, 7) muni d'un point de raccordement pour un générateur d'un signal de détection comprend un contact normalement en position fermée, constitué par deux pièces conductrices (8, 9) qui, disposées sur la ligne dont la continuité est à assurer, sont en appui l'une contre l'autre lorsqu'aucune action n'est exercée sur elles, le point de raccordement comportant des moyens d'introduction et de guidage d'une fiche (12) qui, reliée au générateur du signal de détection, est destinée, lorsqu'elle est engagée dans le boîtier, à prendre appui sur la pièce conductrice (8) reliée au tronçon de ligne dans lequel le signal doit être injecté tout en écartant celle-ci de l'autre pièce conductrice (9).

2. Dispositif selon la revendication 1, **caractérisé en ce que** les pièces conductrices sont constituées par des lamelles métalliques dont l'une (8) au moins est déformable élastiquement pour être en appui élastique contre l'autre lamelle (9) en position normale, et écartée de celle-ci par déformation élastique sous l'action de la fiche (12) d'amenée du signal de détection.

3. Dispositif selon l'une des revendications 1 et 2, **caractérisé en ce que** la pièce conductrice (9) qui n'est pas actionnée par la fiche (8) d'amenée du signal de détection est raccordée à la terre directement ou par l'intermédiaire d'un para-surtensionneur.

4. Dispositif selon l'une des revendications 1 à 3, **caractérisé en ce qu'**il comprend au moins un boîtier de fin de ligne (2) comportant une pièce conductrice (9) reliée à la terre et une pièce conductrice (8) déformable sous l'action de la fiche (12) d'amenée du signal de détection, reliée au tronçon de conducteur (3) dans lequel le signal doit être injecté.

5. Dispositif selon l'une des revendications 1 à 3, **caractérisé en ce qu'**il comprend au moins un boîtier de liaison (4) de deux conducteurs (3) comportant deux pièces conductrices déformables (8) reliées chacune à un conducteur (3) et en contact chacune avec une pièce conductrice (9) non déformable, les deux pièces conductrices non déformables (9) étant reliées par un tronçon (13) de conducteur lui-même relié à la terre (10) par l'intermédiaire d'un para-surtensionneur (14).

6. Dispositif selon l'une des revendications 1 à 3, **caractérisé en ce qu'**il comprend au moins un boîtier de fin de ligne de dérivation (6) comportant une pièce conductrice (9) reliée à la terre (10) par l'intermédiaire d'un para-surtensionneur (14) et une pièce conductrice déformable (8) sous l'action de la fiche (12) d'amenée du signal de détection, reliée au tronçon de conducteur (5) de la ligne de dérivation dans lequel le signal doit être injecté, c'est-à-dire le tronçon de conducteur relié directement ou non à la ligne principale du dispositif.

7. Dispositif selon l'une des revendications 1 à 3, **caractérisé en ce qu'**il comprend au moins un boîtier double de fin de ligne (7), comportant deux pièces conductrices déformables (8) reliées chacune à un conducteur (3) et en contact chacune avec une pièce conductrice non déformable (9) reliée directement à la terre (10).

## Patentansprüche

1. Vorrichtung zur Detektion und Überwachung unterirdischer Bauwerke, mit einem nahe an dem zu detektierenden und überwachenden Bauwerk angeordneten linearen Leiterelement (3, 5), das einem Verbindungssystem zugeordnet ist, welches Gehäuse (4) zum Verbinden mehrerer Abschnitte des Leitern sowie Leitungsende-Gehäuse (2, 6, 7) aufweist, wovon zumindest einige einen Verbindungspunkt für einen Detektionssignal-Generator und mindestens einen Schalter enthalten, der ein Isolieren des Leiterabschnitts, in den das Signal injiziert werden soll, ermöglicht, **dadurch gekennzeichnet, dass** ein Gehäuse (2, 4, 6, 7), das mit einem Verbindungspunkt für einen Detektionssignal-Generator ausgestattet ist, einen normalerweise in der geschlossenen Stellung befindlichen Kontakt aufweist, der aus zwei leitenden Teilen (8, 9) gebildet ist, die auf einer Leitung, deren Kontinuität es zu gewährleisten gilt, angeordnet sind und in einem gegeneinandergedückten Zustand sind, wenn auf sie nicht eingewirkt wird, wobei der Verbindungspunkt Mittel zum Einleiten und Führen einen Steckers (12) aufweist, der mit dem Detektionssignal-Generator verbunden ist und dazu bestimmt ist, um bei seinem Einführen in das Gehäuse an das leitende Teil (8) gedrückt zu werden, das mit dem Leitungsabschnitt, in den das Signal injiziert werden soll, verbunden ist und dabei von dem anderen leitenden Teil (9) wegbewegt wird.

2. Vorrichtung nach Anspruch 1, **dadurch gekennzeichnet, dass** die leitenden Teile aus metallischen Lamellen gebildet sind, wovon mindestens eine Lamelle (8) elastisch verformbar ist, um in der normalen Stellung an der anderen Lamelle (9) elastisch anzuliegen, und um von dieser durch elastische Verformung unter Einwirkung des Detektionssignal-zufuhrsteckers (12) wegbewegt zu werden.

3. Vorrichtung nach einem der Ansprüche 1 und 2, **dadurch gekennzeichnet, dass** das leitende Teil (9), das durch den Detektionssignal-Zufuhrstecker (12) nicht betätigt wird, unmittelbar oder über einen Überspannungsableiter geerdet iat.

4. , Vorrichtung nach einem der Ansprüche 1 bis 3, **dadurch geKennzeichnet, dass** sie mindestens ein Leitungsende-Gehäuse (2) aufweist mit einem leitenden Teil (9), das mit der Erde verbunden ist, sowie einem leitenden Teil (8), das unter Binwirkuig des Detektionssignal-Zufuhreteckers (12) verformbar ist und mit dem Leiterabachnitt (3), in den das signal injiziert werden soll, verbunden ist.

5. Vorrichtung nach einem der Ansprüche 1 bis 3, **dadurch gekennzeichnet, dass** sie mindestens ein Gehäuse (4) zum Verbinden von zwei Leitern (3) aufweist, die zwei verformbare leitende Teile (8) enthalten, die jeweils mit einem Leiter (3) verbunden sind und jeweils mit einem nicht-verformbaren leitenden Teil (9) in Kontakt sind, wobei die beiden nicht-verformbaren leitenden Teile (9) über einen Leiterabschnitt (13) verbunden sind, der seinerseite über einen Überepannungsableiter (14) mit der Erde (10) verbunden ist.

6. Vorrichtung nach einem der Ansprüche 1 bis 3, **dadurch gekennzeichnet, dass** sie mindestens ein Abzweigleitungs-Endgehäuse (6) aufweist mit einem leitenden Teil (9), das über einen Überspannungsableiter (14) mit der Erde (10) verbunden ist, und einem leitenden Teil (8), das unter Einwirkung des Detektionssignal-zufuhrsteckers (12) verformbar ist und mit dem Leiterabschnitt (5) der Abzweigleitung, in den das Signal injiziert werden soll, d.h. mit dem unmittelbar oder nicht mit der Hauptleitung der Vorrichtung verbundenen Leiterabschnitt, verbunden ist.

7. Vorrichtung nach einem der Ansprüche 1 bis 3, **dadurch gekennzeichnet, dass** sie mindestens ein Leitungsende-Doppelgehäuse (7) aufweist, das zwei verformbare leitende Teile (8) enthält, die jeweils mit einem Leiter (3) verbunden sind und jeweils mit einem nicht-verformbaren leitenden Teil (9) in Kontakt sind, das unmittelbar mit der Erde (10) verbunden ist.

## Claims

1. Device for detecting and monitoring buried works of the type comprising a linear conductive element (3,5) disposed dose to the works to be detected and monitored, associated with a connection system comprising boxes (4) for connecting several sections of conductor and end of line boxes (2, 6, 7), at least some of which comprise a connecting point for a detection signal generator and at least one switch for isolating the section of conductor In which the signal is to be injected, **characterised in that** a box (2, 4, 6, 7) provided with a connection point for a detection signal generator comprises a contact normally In the closed position, consisting of two conductive parts (8. 9) which, disposed on the line whose continuity is to be provided, are in abutment against each other when no action is exerted on them, the connection point comprising means of introducing and guiding a plug (12) which, connected to the detection signal generator, is intended, when it is engaged in the box, to bear on the conductive part (8) connected to the section of line in which the signal is to be injected whilst moving it away from the other conductive part (9).

2. Device according to claim 1, **characterised in that** the conductive parts consist of metallic blades, at least one of which (8) is elastically deformable so as to be in elastic abutment against the other blade (9) in the normal position, and separated from it by elastic deformation under the action of the plug (12) bringing the detection signal.

3. Device according to one of claims 1 and 2, **characterised in that** the conductive part (9) which is not actuated by the plug (8) bringing the detection signal is connected to earth directly or by means of a surge arrester.

4. Device according to one of claims 1 to 3, **characterised in that** it comprises at least one end of line box (2) comprising a conductive part (9) connected to earth and a conductive part (8) deformable under the action of the plug (12) bringing the detection signal, connected to the section of conductor (3) into which the signal is to be injected.

5. Device according to one of claims 1 to 3, **characterised in that** it comprises at least one box (4) for connecting two conductors (3) comprising two deformable conductive parts (8) each connected to a conductor (3) and each in contact with a non-deformable conductive part (9), the two non-deformable conductive parts (9) being connected by a section (13) of conductor itself connected to earth (10) by means of a surge arrester (14).

6. Device according to one of claims 1 to 3, **characterised in that** it comprises at least one by-pass end of line box (8) comprising a conductive part (9) connected to earth (10) by means of a surge arrester (14) and a conductive part (8) deformable under the action of the plug (12) bringing the detection signal, connected to the conductive section (5) of the by-pass line in which the signal is to be injected, that is to say the section of conductor connected directly or not through the main line of the device.

7. Device according to one of claims 1 to 3, **characterised in that** it comprises at least one double end of line box (7) comprising two deformable conductive parts (8) each connected to a conductor (3) and each in contact with a non-deformable conductive part (9) directly connected to earth (10).
